# EUROPEAN PATENT APPLICATION

(11) **EP 2 261 314 A2**
(43) Date of publication of application: **15.12.2010**
(21) Application number: 10181952.2
(22) Date of filing: 24.07.2002
(51) Int. Cl.: C12C 7/00, C12C 11/00, C12C 12/02, C08B 37/00

(54) **A process for enhancing the body and taste of malt beverages**

(30) Priority: 26.07.2001 US 308062 P
(62) Divisional of application: 02768347.3
(71) Applicant: DANISCO A/S, 1001 Copenhagen K (DK)
(72) Inventor: Shah, Pankaj, Lake Buff, IL 60044 (US); Milner, Bruce, Terre Haute, IN 47802 (US)
(74) Representative: Hjelt, Pia Dorrit Helene

(57) **Abstract**

The present invention is directed to a method of producing a malt beverage by adding thereto during the process an effective amount of a sugar polymer .It is also directed to the product produced thereby. Another embodiment is directed to a process of purifying a product, such as polydextrose having a glucose impurity by dissolving the product in water and adding yeast thereto, fermenting under conditions effective to convcrl the glucose to carbon dioxide and elhanol and separating the compound from the carbon dioxide and ethanol

## Description

The present invention relates to a method which enhances the foam properties, the body and the flavor of a malt beverage and to the compositions possessing any one of those properties. More particularly, the present invention relates to methods for enhancing the foam characteristics, enhancing the body and flavor of a fermented malt beverage.

As used herein, the term "malt beverage" includes such foam forming fermented malt beverages as full malted beer, ale, dry beer, near beer, light beer, low alcohol beer, low calorie beer, porter, bock beer, stout, malt liquor, non-alcoholic malt liquor and the like. The term "malt beverages" also includes alternative malt beverages such as fruit flavored malt beverages, e.g., citrus flavored, such as lemon-, orange-, lime-, or berry-flavored malt beverages, liquor flavored malt beverages, e.g., vodka-, rum-, or tequila-flavored malt liquor, or coffee flavored malt beverages, such as caffeine-flavored malt_liquor, and the like.

Beer is traditionally referred to as an alcoholic beverage derived from malt, which is derived from barley, and optionally adjuncts, such as cereal grains, and flavored with hops.

Beer can be made from a variety of grains by essentially the same process. All grain starches are glucose homopolymers in which the glucose residues are linked by either alpha- 1,4- or alpha- 1,6-bonds, with the former predominating.

The process of making fermented malt beverages is commonly referred to as brewing. The principal raw materials used in making these beverages are water, hops and malt. In addition, adjuncts such as common corn grits, refined corn grits, brewer's milled yeast, rice, sorghum, refined corn starch, barley wheat, wheat starch, torrified cereal, cereal flakes, rye, oats, potato, tapioca, and syrups, such as corn syrup, sugar cane syrup, inverted, sugar syrup, barley and/or wheat syrups, and the like may be used as a source of starch. The starch will eventually be converted into dextrins and fermentable sugars.

For a number of reasons, the malt, which is produced principally from selected varieties of barley, has the greatest effect on the overall character and quality of the beer. First, the malt is the primary flavoring agent in beer. Second, the malt provides the major portion of the fermentable sugar. Third, the malt provides the proteins, which will contribute to the body and foam character of the beer. Fourth, the malt provides the necessary enzymatic activity during mashing.

Hops also contribute significantly to beer quality, including flavoring. In particular, hops (or hops constituents) add desirable bittering substances to the beer. In addition, the hops act as protein precipitants, establish preservative agents and aid in foam formation and stabilization.

The process for making beer is well known in the art, but briefly, it involves five steps:
(a) mashing
(b) lautering and sparging
(c) boiling and.hopping of wort
(d) cooling, fermentation and storage, and
(e) maturation, processing and packaging.

In the first step, milled or crushed malt is mixed with warm water and held for a time under controlled temperatures to permit the enzymes present in the malt to convert the starch present in the malt into fermentable sugars.

In the second step, the mash is transferred to a "lauter tun" where the liquid is separated from the grain residue. This sweet liquid is called "wort". The mash is typically subjected to sparging which involves rinsing the mash with additional water to recover the residual wort in the grain residue.

In the third step, the wort is boiled vigorously. This sterilizes the wort and helps to develop the color, flavor and smell. Hops are added at some point during the boiling.

In the fourth step, the wort is cooled and transferred to a fermenter, which either contains the yeast or to which yeast is added. The yeast converts the sugars by fermentation into alcohol and carbon dioxide gas. Fermentation continues until only non-fermentable sugars remain; at this point the fermenter is chilled to stop fermentation. The yeast settles to the bottom of the vessel and is removed.

In the last step, the beer is cooled and stored for a period of time, during which the beer clarifies and its flavor develops, and any material that might impair the appearance, flavor and shelf life of the beer settles out. Prior to packaging, the beer is carbonated and, optionally, filtered and pasteurized.

After fermentation, a beverage is obtained which usually contains from about 3% to about 6% alcohol by weight. The non-fermentable carbohydrates are not converted during fermentation and form the majority of the dissolved solids in the final beer. This residue remains because of the inability of malt amylases to hydrolyze the alpha- 1,6-linkages of the starch. The non-fermentable carbohydrates contribute about 50 calories per 12 ounces of beer.

Recently, there has been a widespread popularization of brewed beverages called light beers, reduced calorie beers or low calorie beers, particularly in the U.S. market. As defined in the U.S., these beers have approximately 30% fewer calories than a manufacturer's "normal" beer.

However, the methods of preparing these beers is quite varied. One method of decreasing the total calorie content is to dilute or adjust the beer with water. This, however, is not a preferred solution, because both alcohol and carbohydrate sources of calories are diluted and the final alcohol content is less than that of a normal beer. This decrease in both alcohol and carbohydrate content adversely affects the flavor and mouthfeel, i.e., body, of the beer.

Another method of decreasing the total calorie content is to ferment a wort of lower gravity than that of regular beer. In regular beer, the original gravity of wort therein ranges from 10 to 12 degrees Plato (°P), while a light beer may be fermented from a wort of original gravity of 6 to 9°P. The alcohol content can be made up to that of regular beer by using adjunct sources of fermentable sugar, such as those described hereinabove.

A third method of decreasing calories is the use of saccharifying enzymes to hydrolyze the residual carbohydrates, which, upon fermentation, are converted to alcohol. See, for example, U.S. Patent No. 3,379,534 to Gablinger, et al., U.S. Patent No. 4,355,110 to Line, et al., U.S. Patent No. 4,251,630 to Pratt, et al., and U.S. Patent No. 4,272,552 to Zastrow.

Other methods of reducing caloric content are known in the art, such as the use of fermentable sugars to partially substitute for the malt in the process, the use of dextrin assimilable yeasts, adjunct fermentation processes, and secondary fermentation processes, to name just a few.

Besides low calorie beers, during the last few years, there has also been an increasing demand for alcoholic beverages, such as beer, with reduced alcohol content. By low or reduced alcohol beer, it is meant that the beer contains about 2% or less alcohol. As used herein, low-alcohol beer includes very low-alcohol beer (0.5% to 1.0%) and "alcohol-free" beers that contain less than about 0.5% alcohol and more preferably less than 0.05% alcohol.

Diverse techniques have been employed to prepare beers containing little or no alcohol such as suspending fermentation before the alcohol level becomes too high (see European Patent Application 213,220); conducting the fermentation using strains of yeast that do not produce alcohol (See European Patent Application 245,891); distillation of ethanol to reduce the ethanol content thereof, e.g., See Braveriindustrie 71 (1986) page 480; pervaporation (see European Patent Application 332,738); dialysis, e.g., See Weinwirtschaft Tech. 9 (1986), page 346; and the like.

Another process for reducing the alcohol content of beer, described in U.S. Patent No. 4,617,127, is reverse osmosis. When beer is subjected to the process of reverse osmosis, a permeate is obtained consisting essentially of water and some alcohol, as well as a retained material (retentate) having a higher alcohol concentration than the original beer. A product having an alcohol content less than the alcohol content of the original beverage is obtained if the retentate is diluted with water to the original volume.

However, these various low alcohol or low calorie beer products have been generally found to be unsatisfactory to the consumer. For example, it was noted that low alcohol beers were dull and lacking in flavor balance. On the other hand, it was noted that low calorie beers lacked body or mouthfeel relative to the regular beers. Moreover, both lacked the flavor of regular beer.

There have been some attempts to improve the body of low calorie or low alcohol beers by the addition of other non-fermentable sugar polymers. U.S. Patent No. 4,680,180 to Bussiere, et al., describes a low alcohol beer prepared with hydrogenated starch hydrolysates. Substitution of 20% of the total dry extract of malt with hydrogenated starch hydrolysates during the brewing process results in a low alcohol beer with a "pleasant taste" and "sufficient body". However, the hydrogenated starch hydiolyzates are relatively sweet, and impart a sweet taste to the beer produced therefrom rather than_the pleasant bitter taste found in regular beer. In a comparative example, beer produced in the same manner but using maltodextrin gave a "thick" or "doughy" impression on tasting.

Japanese Patent Application No. Hei 10-215848 and Hei 8-249 discloses the use of water soluble dietary fibers which are sparingly assimiliated by yeast in beer manufacture, in order to increase the fiber content and improve the body of the final beverage. The fibers cited are pullulan, pectin, water-soluble corn dietary fibers and carageenan. However, the taste of the beer was distinctly different from that of regular beer, owing to the peculiar taste of the dietary fibers. There was no mention therein of the foam properties of the beer so produced.

Japanese Patent Application No. Hei 8-9953 discloses the use of a sugar polymer adjunct containing sparingly digestible components, produced by using pyrodextrin as the raw material. The beer so produced is alleged to have good body and taste. However, it was noted that if undigestible sugar polymers other than the specific sparingly digestible saccharides of the invention were used, e.g, konjac mannan or guar gum, the objects of the invention could not be achieved, especially with regard to the flavor.

The present inventors have found a means of preparing a malt beverage, such as beer with low calorie or low alcohol content having the flavor, taste and body similar to the_corresponding regular malt beverage, i.e., beer. For example, they have found that the addition of sugar polymers (which sugar polymers are different from those used in the prior art in making malt beverages, as defined hereinbelow), e.g., polydextrose, to a low calorie malt beverage, e.g., beer, imparted body thereto so that the resulting malt beverage, e.g., beer, possessed the body of a regular malt beverage, e.g., beer. Moreover, they found that the addition of these sugar polymers, e.g., polydextrose, added little or no calories. Moreover, it was surprisingly found that the addition of these sugar polymers, e.g., polydextrose, enhanced the flavor of the low calorie malt beverage, e.g., low calorie beer, without imparting a sweet taste thereto and while maintaining the flavor of the malt beverage, e.g., beer. Furthermore, when the sugar_polymer, e.g., polydextrose, is added to other malt beverages, such as a low alcohol malt beverage, e.g., beer, it was discovered that the addition thereto improved the flavor of the low alcohol malt beverage, e.g., beer. In addition, it was found that the addition of the sugar polymer, e.g., polydextrose, enhanced the body of the low alcohol malt beverage, e.g., beers. Finally, it was discovered that the addition of the sugar polymer, e.g., polydextrose, improved the foam characteristics of low alcohol or low calorie malt beverage, e.g., beer.

Accordingly, the present invention is directed to a malt beverage comprising hops, malt and a sugar polymer, e.g., polydextrose, said sugar polymer being present in an amount sufficient to enhance at least one of the following characteristics; the flavor, foam retention or body of the beer and more preferably at least two of the three characteristics and most preferably all three. Another embodiment is directed to an improved method for preparing a malt beverage in which water, malt, hops and optionally a sugar and/or_adjunct are brewed and the brewed product is fermented to produce a malt beverage, the improvement comprising adding a body enhancing effective amount of a sugar polymer, e.g., polydextrose, thereto, said sugar polymer being added prior to, during or after fermentation.

In another embodiment, the present invention is directed to a method of enhancing at least one of the following sensory characteristics in a malt beverage:
(a) Body or mouthfeel,
(b) flavor or
(c) foam characteristics
by adding to the wort, prior to, during or subsequent to brewing an effective amount of a sugar polymer, e.g., polydextrose.

The present invention is also directed to a process of purifying polydextrose containing a glucose impurity which comprises fermenting said polydextrose with yeast, said yeast being present in an amount effective to convert the glucose to ethanol and carbon dioxide and separating the alcohol and carbon dioxide therefrom.

As used herein, the term "polydextrose" is a low calorie polymer of glucose that is resistant to digestion by the enzymes in the stomach. It includes polymer products of glucose which are prepared from glucose, maltose, oligomers of glucose or hydrolysates of starch, or starch which is polymerized by heat treatment in the presence of an acid, e.g., Lewis acids, inorganic acids or organic acids, including monocarboxylic acids, dicarboxylic acids, and polycarboxylic acids, such as, but not limited to the products prepared by the processes described in U.S. Patent Nos. 2,436,967; 2,719,179; 4,965,354; 3,766,165; 5,051,500; 5,424,418; 5,378,491; 5,645,747 and 5,773,603, the contents of all of which are incorporated by reference. The term "polydextrose" also includes polymer products of glucose prepared by the polycondensation of glucose, maltose, oligomers of glucose or starch hydrolysates described hereinabove in the presence of an acid, and in the presence of a sugar alcohol, e.g:, polyol, such as in the reactions described in U.S. Patent No. 3,766,165. Moreover, the term "polydextrose" includes the glucose polymers that have been purified by techniques described in the art, including any and all of the following but not limited to
(a) neutralization of any acid associated therewith by base addition thereto, or by passing a concentrated aqueous solution of the polydextrose through an adsorbent resin, a weakly basic ion exchange resin, a type II strongly basic ion exchange resin, mixed bed resin comprising a basic ion exchange resin and a cation exchange resin, as described in U.S. Patent Nos. 5,667,593 and 5,645,647, the contents of both of which are incorporated by reference;
(b) decolorizing by contacting the polydextrose with activated carbon or charcoal, by slurrying or by passing the solution through a bed of solid adsorbent or by bleaching with sodium chlorite, hydrogen peroxide and the like;
(c) molecular sieving methods, like UF (ultrafiltration), RO (reverse osmosis), size exclusion, and the like;
(d) enzymatically treated polydextrose;
(e) any other recoguized techniques known in the art.

Moreover, the term polydextrose includes reduced, e.g., hydrogenated, polydextrose, which, as used herein, includes hydrogenated or reduced polyglucose products prepared by techniques known to one of ordinary skill in the art. Some of these techniques are described in U.S. Patent No. 5,601,863 to Borden, et al., 5,620,871 to Caboche and 5,424,418 to Duflot, the contents of all of which are incorporated by reference.

The term "sugar polymer", as used herein refers to a food acceptable non-toxic polymer of sugar which is resistant to enzyme digestion in the human stomach and which is prepared by any of the processes described hereinabove for polydextrose, using one or more sugars as the starting material. The term "sugar polymer" includes polydextrose, but also includes other food acceptable products in which other sugars are used in lieu of glucose in the polycondensation reaction, as described hereinabove. Thus, for example, it includes the products from the polymerization of sugars in the presence of acid and optionally, but preferably in the presence of sugar alcohol, as well as the purified products thereof, including utilizing any of the purified techniques described hereinabove. It also includes "hydrogenated sugar polymers", which term refers to sugar polymers, as defined herein, which have been reduced or hydrogenated by techniques known in the art, such as those described by the aforementioned U.S. Patent Nos. 5,601,863, 5,620,871 and 5,424,418. As defined, the term "sugar polymer" excludes dextrins and polydextrins.

By "sugars", as used herein, it is meant monosaccharides, disaccharides or oligosaccharides. Although the D and L sugars may be utilized, it is preferred that the sugars have the D configuration.

As used herein, the monosaccharides contain from 3-6 carbon atoms and include aldoses e.g., hexoses. Examples of monosaccharides include glyceraldehydes, erythrose, threose, ribose, arabinose, xylose, lyxose, allose, altrose, glucose, mannose, idose, galactose, talose, erythrulose, ribulose, xylulose, psicose, fructose, sorbose, tagatose, and the like. The monosaccharides may exist as either the D or L isomers, although the D-isomer is preferred.

Examples of disaccarhides include maltose, lactose, sucrose, trehalose, isomaltose and isomaltulose and the like.

The oligosaccharides contain, on average, 3-10 sugar units, and more preferably 3-6 sugar units. Examples of oligosaccharides include fructo-oligosaccharides, maltotriose and the like.

However, it is preferred that the sugars utilized in the polymerization reaction are monosaccharides, and are pentose or hexoses.

The sugar polymer, e.g., polydextrose, used in the present process for making malt beverages is preferably purified. Thus, as defined hereinabove, the sugar polymer may be reduced sugar polymer or non-reduced sugar polymer, i.e., the sugar polymer has not undergone any reduction. It is preferred that the sugar polymer is purified and may be non-reduced or reduced.

The most preferred sugar polymer used in the present process is polydextrose, as defined herein.

It is preferred that the polydextrose, whether it be non-reduced polydextrose, i.e., polydextrose that has not been subjected to reduction, or reduced polydextrose, is purified, using conventional techniques known in the art, e.g., using those described hereinabove. It is most preferred that the polydextrose is reduced and purified polydextrose, or non-reduced and purified polydextrose.

The malt beverage produced in accordance with the present invention contains the ingredients normally contained in that type of malt beverage, except that a sugar polymer e.g., polydextrose, is also present. Thus, for example, if the malt beverage were beer, the beer, whether it be regular beer, low calorie beer, low alcohol beer or the like would contain the ingredients normally found in that type of beer with the addition of the sugar polymer, e.g., polydextrose, as defined herein. For instance, the ingredients utilized in the preparation of beer include water, hops, yeast and malt, especially barley malt. In addition, adjuncts, especially starch containing foods such as rice, corn, and sorghum or sugars, especially monosaccharides, and more especially, glucose, may be added thereto.

The malt beverage produced by the present invention is produced in accordance with conventional techniques known to one of ordinary skill in the art, with the only difference being the addition of the sugar polymer, e.g., polydextrose thereto. The sugar polymer, e.g., polydextrose, may be added at any step in the process. It may be added initially prior to or during the first step of the process, i.e., the mashing step; it may be added to the wort prior to fermentation or after fermentation. In other words, it may be added initially, or during the mashing, or the lautering and sparging step, or the boiling and hopping of wort step, the cooling step or the fermentation step or it may be added during storage, during maturation, and the like or in more than one of any of the aforementioned steps. It may be also be added at the end of the process prior to packaging. It is preferred that it is added prior to fermentation.

The sugar polymer, e.g., polydextrose, may be added as a solid or it may be added as an aqueous solution.

Surprisingly, the sugar polymer, e.g., polydextrose is stable under the conditions of preparing the malt beverage, e.g., beer. More specifically, the sugar polymer, e.g., polydextrose, remains stable during fermentation, i.e., the yeast, e.g., brewer's yeast, does not attack the sugar polymer.

In one embodiment, the present invention is directed to a method of enhancing the body, i.e., mouthfeel of the malt beverage, e.g., beer, by adding a body enhancing effective amount of sugar polymer, e.g., polydextrose, to the malt beverage forming ingredients at any stage of the malt beverage forming process or to the final malt beverage product. The amount of sugar polymer, e.g., polydextrose, added can easily be determined by one of ordinary skill in the art without an undue amount of experimentation, and may vary dependent upon various factors, such as the type of malt beverage that is being manufactured, its lability to enzymatic degradation or hydrolysis, the viscosity of the sugar polymer and the like. However, preferably from 0.1 % to about 10% by weight of the sugar polymer is present in the final malt beverage product content and more preferably from about 0.5% to about 5% by weight is present in the final malt beverage product and most preferably from about 1% to about 3% % by weight is present in the final malt beverage product.

As an example of the efficacy of the effect of the addition of polydextrose, the present inventors have found that the addition of a sugar polymer, such as polydextrose, to a low calorie beer greatly enhances the body thereof. As described hereinabove, one of the complaints of consumers is that low calorie beer significantly lacks the body of regular beer. However, the addition of sugar polymers, such as polydextrose, imparts body or mouthfeel to low calorie beers, and if added in a body enhancing effective amounts, the body is substantially similar to that of regular beer. Moreover, when sugar polymers, such as polydextrose, are added in body enhancing effective amounts to light beer that is commercially sold, the body thereof is significantly enhanced.

Moreover, the resulting beer is characterized by a lower than normal calorie count. Unlike the process used currently for producing light beer, the beer prepared by the process of the present invention not only has the body, e.g., mouthfeel of normal beer, but has less calories. The resulting beer contains the specific gravity of normal beer. Furthermore, the sugar polymers may enhance the color of the final brewed product.

As another example, the addition of sugar polymers, e.g., polydextrose, to low alcohol beer significantly enhances the flavor thereof. More specifically, it is the complaint of consumers that a beer type containing less than normal alcohol was dull and lacking in flavor balance. However, when sugar polymers, e.g., polydextrose, is added to the beer at any of the steps in the low alcohol beer making process, the flavor of the low alcohol beers produced was not only enhanced, but also the smoothness was enhanced. Furthermore, the flavor stability is enhanced relative to the corresponding low alcohol beer.

The flavor enhancing amounts described hereinabove is in the same range as the body enhancing effective amounts described herein above. Preferably, the flavor enhancing amounts range from 0.1 % to about 10% by weight of the final product, and more preferably from about 0.5% to about 5% by weight and most preferably from about 1% to about 3 % % by weight of the final beer content.

An additional advantage of the present process is that the malt beverages, e.g., beers, produced by the process of the invention, when poured or drawn, retain the foam or head for a longer period of time. There are three aspects of foam characteristics that consumers look for in a malt beverage, such as beer: (a) the formation of the foam, (b) retention of the foam and (c) the ability of the foam to cling to the side of the glass. The addition of the sugar polymer to the malt beverage forming process, in accordance with the present invention, can enhance at least one of the aforementioned characteristics,_e.g., retain the head of the foam for a longer period of time. Moreover, the addition of_the sugar polymer to a malt beverages can also additionally enhance two or all three of the aforementioned foam characteristics.

Foam is one attribute that consumers want, as they are continually subjected to the sight of a foaming glass or stein of beer through the advertising media. Foam is typically the first attribute the consumer becomes aware of as beer is poured or drawn. A number of beers produce a relatively good foam immediately after pouring, but the foams so produced may not be as persistent as is usually desired by consumers. The formation of a good so-called head of foam when beer is poured into a glass is considered by many to be a visual gauge of beer quality. A fine, creamy, stable foam has definite psychological appeal to many consumers.

Consequently, a number of consumers desire a product that, when poured into a glass, will form a stable head that will persist until the beer is consumed.

The addition of the sugar polymer, e.g., polydextrose, in foam enhancing amounts increases the retention of foam. In addition, the ability to cling to the side of the glass_may also be enhanced. The preferred amounts used to increase the retention of foam is the same as those amounts described hereinabove with respect to enhancement of flavor and/or the enhancement of body.

The sugar polymer, e.g., polydextrose, is compatible with the beer, that is, it is generally not degraded thereby, nor does it degrade the malt beverage, and the resulting malt_beverage maintains its stability.

Thus the addition of the sugar polymer, e.g., polydextrose, in the process of making the malt beverage significantly enhances the characteristics thereof. For example, if a malt beverage, e.g., low calorie beer, regular beer, low alcohol or no alcohol beer and the like, lacked desirable properties possessed by a full calorie beer, such as body, the addition of the sugar polymer during the process of making the malt beverage would_produce a malt beverage having substantially enhanced body. In another example, if the malt beverage, such as low calorie beer or low alcohol or no alcohol beer, or regular beer and the like, lacked the flavor balance desired, the addition of the sugar polymer e.g., polydextrose, in enhancing effective amounts during the process of making the malt beverage significantly enhances the flavor balance thereof. Moreover, if the malt beverage, such as low calorie beer, low alcohol or no alcohol or regular beer lack the desired foam characteristics, the addition of the sugar polymer, e.g., polydextrose, in effective amounts during the malt beverage making process significantly enhances the foam characteristics. Moreover, the addition of the sugar polymer, e.g., polydextrose, preferably enhances more than one of the following characteristics: flavor, foam characteristics and mouthfeel; e.g., preferably the addition thereof enhances at least two of these characteristics and more preferably all three characteristics. In addition, the addition of the sugar polymer in the malt beverage making process does not increase the calorie content and, at the same time, may lower the calorie content of the malt beverage.

The methodology described herein is applicable to the preparation of any malt beverage, e.g., regular beer, low alcohol or non-alcohol beer, or low calorie beer. That is, these beers are prepared with standard techniques, except that sometime during the process, the sugar polymer, e.g., polydextrose, is added thereto.

Thus, for example, non-alcohol beer can be prepared using the techniques by using immobilized yeast, such as described in U.S. Patent Nos. 5,612,072 and 5,079,011 and WO 000/23561, the contents of all of which are incorporated by reference, except that the sugar polymer is added at some point during the process described therein for making the beer product, e.g., it may be added to the wort at any stage during the process.

The present inventors have found that the present method also purifies the polydextrose. In the process for preparing polydextrose from glucose, some of the glucose that is not polymerized becomes an impurity thereto. Inasmuch as yeast ferments glucose to ethanol and carbon dioxide, the present inventors have found a means of inexpensively and completely removing the glucose associated with the polydextrose, which in some cases may be as high as 2.5 to about 4% by weight of the polydextrose. Therefore, an embodiment of the present invention is directed to a process for removing glucose impurities from polydextrose which comprises fermenting the polydextrose with yeast under fermentation conditions to convert the glucose to carbon dioxide and ethanol and separating therefrom the ethanol and carbon dioxide. It is to be understood that only a small amount of yeast is required to perform the oxidation. However, the more yeast present, the faster the fermentation will proceed. One skilled in the art can easily determine the optimal amount of yeast. The polydextrose associated with glucose is treated with the yeast at effective fermentation temperatures until substantially all of the glucose is converted to ethanol and carbon dioxide.

Inasmuch as the carbon dioxide is a gas, it separates readily from the polydextrose and the yeast. The ethanol may be removed by techniques known to one of ordinary skill in the art. For example, if the polydextrose is a solid, it may removed by filtering or decanting. This not only removes the ethanol but also separates the yeast from the polydextrose. Other techniques include evaporation, especially under reduced pressure, distillation, and the like.

If the polydextrose associated with glucose is used in the above-identified process to make beer, there is an added benefit: the glucose is converted to ethanol and the ethanol need not be removed. Instead, it will be retained in the beer product, thereby increasing the alcohol content.

When the polydextrose containing glucose is treated with yeast, the glucose is converted completely; carbon dioxide and ethanol are formed. Moreover, the yeast does not attack the residual sorbitol or anhydroglucose that are additionally present. The sugar free product may then be further purified by conventional techniques known to one of ordinary skill in the art, such as filtration, resin treatment, carbon treatment, evaporation, and the like, to get the desired purity and flavor characteristics of the final product.

Besides polydextrose, this technique can be used to purify other sugar polymers prepared from glucose, fructose or a hydrolysate product of a disaccharide, trisaccharide or polysaccharide, which when hydrolyzed forms glucose or fructose.

As used herein, the term "light beer", "lite beer", and "low calorie beer" are synonyms and are used interchangeably.

Unless indicated to the contrary, percentages are by weight.

The following examples further illustrate the present invention.

### EXAMPLE 1

Polydextrose was prepared by the process described in U.S. Patent No. 3,766,165 to Rennhard and the product thereof was purified in accordance with the teachings in U.S. Patent No. 5,667,593. A mixture of 488 grams of the purified polydextrose and 1512 grams of water was chilled and carbonated to make a polydextrose solution with 96 calories per 12 ounces (hereinafter PDX solution). This was added to Bud Light® or Miller Lite® light beers in various blends described in the following table and the resulting product was tasted by a taste panel and rated:

| **Blend (v/v)** | **Taste Panelists' Comments Regarding Taste of Blend Relative to Commercial Product** |
|---|---|
| Blend of 2% PDX solution and 98% Bud | No significant difference between Blend |
| Light® | and Bud Light® |
| Blend of 4% PDX solution and 96% Bud | No significant difference between Blend |
| Light® | and Bud Light® |
| Blend of 6% PDX solution and 94% Bud | No significant difference between Blend |
| Light® | and Bud Light® |
| Blend of 8% PDX solution and 92% Bud | Panelists found at 95% confidence level a |
| Light® | preference for the Blend |
| Blend of 2% PDX solution and 98% | Panelists found at 95% confidence level a |
| Miller Lite ® | preference for the Blend |
| Blend of 6% PDX solution and 94% | Panelists found at 95% confidence level a |
| Miller Lite ® | preference for the Blend |

### EXAMPLE 2

8.15 liters of carbon filtered city water containing 400 ppm gypsum were placed in a mash tun with 2.77 kg 2-row malt. The contents were mashed at 45°C. The temperature was held at 45°C for 30 minutes. After 30 minutes, the temperature of the mash tun was increased at 1°C per minute until the temperature was 63°C. The temperature of the mash tun was maintained at 63°C for 45 minutes. At the end of 45 minutes, the temperature was increased at 0.3°C per minute until the temperature reached 73°C. The temperature was maintained at 73°C to permit the maximum hydrolysis of the starch. When the starch hydrolysis process was completed, the contents were transferred to a lauter tun at 73°C where the contents were subjected to lautering and sparging at 77°C with the fresh carbon filtered water containing 400 ppm gypsum. At the end of the sparge, the gravity of the wort was 9.46°P. The wort was then transferred to a kettle. Before the addition of hops thereto, 2 liters of the wort was removed and placed in the unhopped adjunct in Brew A described hereinbelow.

The remaining wort was boiled for 60 minutes. 13.8 grams of Hallertau hops were immediately added. Thirty minutes later another 13.8 grams of Hallertau hops were added. After 45 minutes of boiling, 6.9 grams of Hallertau hops were added. After boiling for 60 minutes, the wort and hops mixture was cooled and the hops and insoluble solids were removed by filtration therefrom and the wort collected. The wort was aerated to saturation with sterile air.

Three different brews were set up as follows:
Brew A: 2.0 liters of unhopped kettle wort (measured hot) made up to 3.5 liters with deionized water and boiled in the autoclave.
Brew B: 209 grams dextrose (91.5% extract) made up to 3.5 liters with deionized water and boiled in the autoclave.
Brew C: 209 grams dextrose (91.5% extract) plus 150 grams of polydextrose prepared in accordance with the procedure described in U.S. Patent No, 5,645,647 made up to 3.5 liters with deionized water and boiled in the autoclave.

2.5 grams centrifuged yeast solids were added per liter of wort. 5.5 liters of the cooled wort having a gravity of 10.1 2°P was transferred to three different fermenters designated A, B and C, and the appropriate adjunct brew added to each of the fermenters to give a final volume in each fermenter of 9 liters at 8.25°P. The wort was fermented at 54°F.

In addition, 0.8 ml Optidex L-300 (amyloglucosidase) was added to each fermenter. When the AE change was less than 1 .0°P per day and the diacetyl precursor test was negative, the contents in the fermenter were cooled quickly to 35°F. The various brews were transferred to different storage vessels and stored at 35°F to 38°F for seven days. At the end of seven days, the storage vessels were transferred to an ice water bath and the contents thereof were stored at 32°F for seven days. The resulting beer was filtered with a tripod filter using filter pads (Whatman GF/D to GF/B to Millipore APWP 14250 0.8 micron) (no diatomaceous earth) into bright beer vessels. Carbonated deaerated water was added to each bottle and they were carbonated to 2.7 volumes.

They were packaged in returnable amber bottles.

The beers from the different brews were tested by the taste panelists. They rated Brew A and C similar but found Brew C significantly better than the control (Brew B) containing dextrose. In addition, unlike Brew A and Brew B, Brew C had a very dry finish, like that found in Bud Light®.

### EXAMPLE 3

Five brews were prepared containing 16 L total volume in a brew kettle at an original gravity of 13 degree plato.

| | |
|---|---|
| BREW A: | All malt (control) light beer |
| | no adjunct additions |
| | made 105 calories |
| | |
| BREW B: | Dextrose adjunct light beer 507.2 grams dextrose solids |
| | made up to 4 liters and added prior to kettle boil 105 calories |
| | |
| BREW C: | Dextrose adjunct and light beer (additional calories) containing polydextrose subjected to anion and cation exchange: |
| | 507.2 grams dextrose solids and 669.3 grams |
| | polydextrose syrup (70% solids) made up to 4 liters |
| | and added prior to kettle boil |
| | 115 calories |
| | |
| BREW D: | Dextrose adjunct and light beer (equivalent calories) containing polydextrose subjected to anion and cation exchange: |
| | 382.0 grams dextrose solids and 669.3 grams polydextrose syrup (70% solids) made up to 4 liters |
| | and |
| | added prior to kettle boil. |
| | 105 calories |
| | |
| BREW E: | Dextrose adjunct and polydextrose with the monomers essentially removed (additional calories): |
| | 507.2 grams dextrose solids and 468.5 grams |
| | polydextrose |
| | low monomer powder made up to 4 liters and added |
| | prior to kettle boil. |
| | 115 calories |

The various brews were prepared using carbon filtered water treated with 0.4 grams of gypsum per liter of water, a blend of 2-row pale malts, Cascade hop Pellets (4.5% alpha acids) and Hallertau hop pellets (3.4% alpha acids)

3.30 Kg of 2-row pale malt was mixed with 8.15 L of brewing water and was mashed at 45°C in a mash tun. The mash was held at 45°C for 30 minutes and then the temperature was increased at 1°C per minute until 65°C. The mash was held at 65°C for 30 minutes. Then the temperature was increased at 1°C per minute to 75°C. When the starch hydrolysis was completed, the contents were transferred to a Lauter tun at 75°C where the contents were subjected to lautering and sparging at 75°C. The target final gravity was approximately 13 degrees plato, and the contents were transferred to a kettle.

The adjunct additions described in Brews B-E were added to the kettle. Hops were added to the kettle as follows: 16 grams of Cascade hops were added 60 minutes prior to boiling, 13.5 grams of Hallertau hops were added 30 minutes prior to boiling, and 7.0 grams of Hallertau hops were added 15 minutes prior to boiling. The contents of the kettle were boiled for 60 minutes.

The resulting wort was transferred from the kettle to a polycarbonate whirlpool vessel and clarified. The wort was aerated and cooled to 11-12°C. The clarified wort was fermented in a fermentation vessel at a pitching rate of 1.5 gram (centrifuged lager yeast) per liter of wort. 1.40 ml of amyloglucosidase (Optidex L-300) was added per 16 L wort (90 ppm). The wort was fermented at 11-12° C for 10 days. Then the fermented wort was crash cooled to 3-4°C. At the completion of the fermentation, the wort was transferred to a storage vessel and held there for 7 days at 3-4°C. Then the contents were transferred to secondary storage vessel at 0-2°C for 5 days for final maturation.

The resulting beers were filtered through a tripod filter using filter pads membrane filter (Whatman GF/D to whatman GF/B to Millipore AAWP14250). Dearated, carbonated carbon filtered adjusted water was added to the filtered beer to provide a finished product of approximately 100 calories per 12 oz (354.9 mL) bottle or 110 calories/bottle for additional adjunct beers. The filtered beers were collected in bright beer tank and each beer was carbonated to approximately 2.2 volume.

All of the beers were packaged in non-returnable amber bottles using CO₂ purge and CO₂ back pressure filling technique. The beers were pasteurized to approximately 10 PU.

The various brewed beers were given to taste panels. In addition, the brewed beers were analyzed, and various measurements were taken including the real degree of attenuation and sigma foam values using standard techniques known in the art. Furthermore, the various brews were also stored for 3 months (90 days) and these stored beers were analyzed and given to taste panels.

The results are as follows:
1) Laboratory analysis carried out on both fresh beers and those stored for 3 months show that there were no major differences between any of the finished beers. In other words, all of the brews containing polydextrose created a beer with typical measured characteristics.
2) The foams on all beers were rated good and the sigma foam values are as follows:

| BREW A | BREW B | BREW C | BREW D | BREW E |
|---|---|---|---|---|
| 122-124 | 106-110 | 118-126 | 118-119 | 113-116 |

Thus, the sigma foam values for the all-malt and polydextrose containing beer were higher than that of the adjunct containing beer (Brew B). The higher the sigma foam value, the better the foam characteristics of the beer.
3) There were no obvious or apparent signs of the polydextrose containing beer changing or breaking down over time.
The RDA values were as follows:

| BREW A | BREW B | BREW C | BREW D | BREW E |
|---|---|---|---|---|
| 56.24 | 64.01 | 50.65 | 52.18 | 52.75 |

4) Triangular taste panels or the initial beers indicated that Brew D was significantly similar to the all malt beer (Brew A). However, triangular taste panels carried out after 90 days were less conclusive but suggested that Brew E was significantly similar to the all malt beer (Brew A).
5) Descriptive taste panels of both fresh and 90 day beer indicated that there were little differences in flavor characteristics between beers of Brew A and Brews C-E. Any changes seen over time are those typically associated with the staling/aging process (sweetness, oxidation, breadiness, papery, nutty and caramel). Thus, the polydextrose containing beers did not significantly alter the normal flavor profile of the finished beer.
6) Taste panels carried out on samples at 90 days comparing the adjunct beer (Brew B) with the polydextrose beer (Brew C-E) indicated that there were definite differences in body and mouthfeel between Brews C-E and Brew B, with Brews C-E given a much higher rating. The differences most noticeable were those associated with smoothness, creaminess, astringency and overall coating.

Thus, the data indicated similarities between the all malt beer and the polydextrose containing beers. Moreover, the data show that the polydextrose containing products produce a beer without contributing any negative effects in processing, flavor, or physical characteristics. The inclusion of the polydextrose products did not negatively affect the finished product; it did not become unstable in a beer environment or accelerate the staling process.

However, the data also show that the addition of polydextrose enhanced the beer. More specifically, the data show that the polydextrose containing beer had significantly enhanced foaming characteristics compared to the adjunct containing beer. In addition, they had enhanced body and flavor relative to the adjunct containing beer.

### EXAMPLE 4

The pitch rate or amount of yeast added was one dry packet (10grams) to 2 gallons of 20% solution of polydextrose. This was allowed to ferment for 5 days and then was filtered and subjected to cation and anion ion exchange. The resin treated polydextrose was tested for residual glucose, sorbitol and anhydroglucose, as well as polydextrose content. The polydextrose so treated had the glucose level reduced from 3.1 % to less than 0.2%, while the sorbitol and anhydroglucose residuals were essentially unchanged. The polydextrose content was also essentially unchanged.

The following is a listing of embodiments which can apply to the invention.
1. A malt beverage which is prepared by brewing a mixture comprising malt, hops, water, a sugar polymer, and optionally one or more adjuncts, said sugar polymer being present in an amount sufficient to enhance one or more of the following defined sensory characteristics:
   (a) body or mouthfeel;.
   (b) flavor; or
   (c) foam characteristics.
   relative to a malt beverage of identical formulation but without the presence of a sugar polymer.
2. The malt beverage of embodiment 1 in which the sugar polymer is polydextrose.
3. The malt beverage of embodiment 1 or 2 in which the sugar polymer is substantially pure.
4. The malt beverage of embodiment 3 in which the substantially pure sugar polymer is prepared by subjecting same to ion-exchange.
5. The malt beverage of embodiment 3 in which the substantially pure sugar polymer is prepared by ultrafiltration or reverse osmosis.
6. The malt beverage of embodiment 1 or 2 in which the sugar polymer is reduced.
7. The malt beverage of embodiment 6 which is a low calorie beer.
8. The malt beverage of embodiment 6 which is a low or no alcohol beer.
9. The malt beverage of embodiment 6 which is a regular beer.
10. The malt beverage of any one of embodiments 1 or 2 in which the sugar polymer is present in an amount ranging from about 0.1 % to about 10% by weight.
11. The malt beverage of embodiment 10 in which the sugar polymer is present in an amount ranging from about 0.5% to about 5% by weight.
12. In a method for the production of a malt beverage wherein a wort is produced by the mashing of barley, said wort being combined with hops, and optionally carbohydrate and flavoring agents and subsequently fermented with yeast to obtain a malt beverage, the improvement comprising adding to the wort prior to, during or subsequent to fermentation an effective amount of a sugar polymer to enhance the body, flavor or foam characteristics of said malt beverage relative to a corresponding malt beverage that does not contain the sugar polymer.
13. The improved method according to embodiment 12 in which the sugar polymer is polydextrose.
14. The improved method according to embodiment 12 or 13 in which the sugar polymer is made substantially pure.
15. The improved method according to embodiment 14 in which the sugar polymer is made substantially pure by subjecting same to an ion-exchange.
16. The improved method according to embodiment 14 in which the sugar polymer is made substantially pure by ultrafiltration or reverse osmosis.
17. The improved method according to embodiment 12 or 13 in which the sugar polymer is reduced.
18. The improved method according to embodiment 12 or 13 in which the sugar polymer is present in amount ranging from about 0.1 to about 10% by weight.
19. The improved method according to embodiment 12 or 13 in which the malt beverage is a low calorie beer.
20. The improved method according embodiment 12 or 13 in which the malt beverage is a low alcohol beer or non-alcohol beer.
21. An improved method according embodiment 12 or 13 in which the malt beverage is a regular beer.
22. A beer produced by the method of embodiments 12 or 13.
23. A method of modifying a malt beverage brewed from, hops and water, and optionally an adjunct, the method comprising brewing a malt beverage to produce a carbonated fermentation product containing the malt beverage ingredients and adding to the malt beverage before, during or after the brewing a sugar polymer, said sugar polymer being present in an amount effective to enhance one or more of the following defined sensory characteristics:
   (a) body or mouthfeel;
   (b) flavor; or
   (c) foam characteristics.
24. The method according to embodiment 23 in which the sugar polymer is polydextrose.
25. The method according to embodiment 23 or 24 in which the sugar polymer is made substantially pure.
26. The method according to embodiment 25 in which the sugar polymer is made substantially pure by subjecting same to ion-exchange.
27. The method according to embodiment 25 in which the sugar polymer is made substantially pure by ultrafiltration or reverse osmosis.
28. The method according to embodiment 23 or 24 in which the sugar polymer is reduced.
29. The method according to embodiment 23 or 24 in which the sugar polymer is present in an amount ranging from about 0.1 to about 25 % by weight.
30. The method according to any one of embodiments 23 or 24 in which the malt beverage is a regular beer.
31. The method according to embodiment 23 or 24 wherein the malt beverage is a low calorie beer or low alcohol beer.
32. A method of enhancing one of the following defined sensory characteristics;
   (i) body or mouthfeel;
   (ii) flavor or
   (iii) foam characteristics of a malt
   beverage which comprises
   (a) preparing a clear wort from a mixture comprising water, malt and optionally an adjunct,
   (b) adding hops to the product of (a) and boiling the hops containing product;
   (c) clarifying and fermenting the product of (b);
   (d) maturing the product of (c); and
   (e) adding to the malt mixture, or wort prior to or during or after the fermenting step, a sugar polymer in an amount sufficient to enhance said sensory characteristic of said malt beverage.
33. The method according to any one of embodiments 12, 13, 23, 24 or 32 in which at least two of the sensory characteristics are enhanced.
34. The method according to embodiment 33 wherein all three sensory characteristics are enhanced.
35. The malt beverage according to embodiment 1 or 2 wherein at least two of the sensory characteristics are enhanced.
36. The malt beverage according to embodiment 35 wherein all three sensory characteristics are enhanced.
37. A method of removing a glucose impurity from a compound which is soluble in water which comprises dissolving the compound in water, contacting the dissolved compound with yeast and subjecting the compound to fermentation under conditions effective to ferment the glucose into carbon dioxide and ethanol and separating the compound from the ethanol and CO₂.
38. The method according to embodiment 37 wherein the compound is polydextrose.

The above embodiments and examples are given to illustrate the scope and spirit of the present invention. These embodiments and examples will make apparent to those skilled in the art other embodiments, and examples. These other embodiments and examples are within the contemplation of the present invention.

Therefore, the present invention should be limited only by the appended claims.

## Claims

1. In an improved method of preparing a malt beverage, in which (a) malt beverage ingredients are mixed and (b) processed to make a fermented malt beverage, the improvement comprising adding a sugar polymer to either step (a), or step (b), or to the product of step (b) in an amount effective to enhance at least one sensory characteristic selected from the group consisting of (a) body or mouthful, (b) flavor and (c) foam characteristics.

2. The improved method according to Claim 1 wherein the enhancing ingredient is polydextrose.

3. In an improved process for the production of substantially non-alcoholic beer at low temperature wherein the process comprises:
(a) preparing a substantially liquid wort;
(b) boiling the wort;
(c) vigorously percolating a gas through the wort under conditions to avoid oxidation thereof;
(d) cooling the wort to a temperature above the freezing point of the wort;
(e) filtering the wort; and
(f) passing the cooled filtered wort through a packed column comprising carrier material and having yeast immobilized thereon, the improvement comprising adding a sugar polymer in an amount to enhance at least one of the sensory characteristics selected from the group consisting of body, flavor and foam characteristics to the wort at any of steps (a)-(f), prior to forming a liquid wort or after step (f).

4. The improved process according to Claim 3 wherein the sugar polymer is polydextrose.
